# FASCICULE DE BREVET EUROPEEN

(11) **EP 3 340 354 B1**
(45) Date de publication et mention de la délivrance du brevet: **03.07.2019**
(21) Numéro de dépôt: 17208607.6
(22) Date de dépôt: 19.12.2017
(51) Int. Cl.: H01M 8/04089, H01M 8/04746, H01M 8/04228

(54) **SYSTÈME ÉLECTROCHIMIQUE À PILE À COMBUSTIBLE COMPORTANT UN DISPOSITIF DE RÉGULATION DE PRESSION À DÉVERSEUR**
ELEKTROCHEMISCHES SYSTEM MIT BRENNSTOFFZELLE, DAS EINE VORRICHTUNG ZUM EINSTELLEN DES DRUCKS MIT EXPANSIONSVENTIL UMFASST
ELECTROCHEMICAL SYSTEM WITH A FUEL CELL COMPRISING A DISCHARGE PRESSURE-CONTROL DEVICE

(30) Priorité: 23.12.2016 FR 1663300
(43) Date de publication de la demande: 27.06.2018
(73) Titulaire: COMMISSARIAT À L'ÉNERGIE ATOMIQUE ET AUX ÉNERGIES ALTERNATIVES, 75015 Paris (FR)
(72) Inventeur: POIROT-CROUVEZIER, Jean-Philippe, 38450 SAINT GEORGES DE COMMIERS (FR); BOUIX, Didier, 38240 MEYLAN (FR); ROSINI, Sébastien, 38100 GRENOBLE (FR); SAUZEDDE, François, 38500 COUBLEVIE (FR)
(74) Mandataire: GIE Innovation Competence Group

(56) Documents cités:
- US-A1- 2007 166 577
- US-A1- 2009 035 614
- US-A1- 2010 055 511
- US-A1- 2013 095 403

## Description

### DOMAINE TECHNIQUE

Le domaine de l'invention est celui des systèmes électrochimiques à pile à combustible comportant un dispositif de régulation de la pression d'un fluide d'alimentation en entrée de la pile à combustible.

### ÉTAT DE LA TECHNIQUE ANTÉRIEURE

Une pile à combustible comporte habituellement un empilement de cellules électrochimiques qui comprennent chacune une anode et une cathode séparées électriquement l'une de l'autre par un électrolyte, dans laquelle a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène par exemple contenu dans de l'air) est amené au contact de la cathode. La réaction électrochimique est subdivisée en deux demi-réactions, l'une d'oxydation et l'autre de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte par exemple contenu dans une membrane polymère, et un conducteur électronique formé par le circuit électrique externe. L'empilement de cellules est ainsi le lieu de la réaction électrochimique : les réactifs y sont apportés, les produits et les espèces non réactives en sont évacués ainsi que la chaleur produite lors de la réaction.

En sortie de pile, dans un fonctionnement dit en mode ouvert, les sorties d'anode et de cathode communiquent avec un conduit d'évacuation des fluides. Ainsi, lorsqu'on alimente la pile en sur-stoechiométrie (rapport supérieur à 1 entre la quantité de réactif injecté et la quantité de réactif consommé), le gaz sortant présente un débit suffisant pour évacuer l'eau produite par la réaction, qui peut ensuite être collectée à l'aide d'un séparateur de phase. Pour éviter de perdre le réactif non consommé, une boucle de recirculation est habituellement prévue, qui permet de réinjecter le réactif non consommé en entrée de pile. Cependant, du fait de la recirculation fluidique, les espèces non réactives, tel que l'azote à l'anode dans le cas d'une alimentation en air à la cathode, voient leur concentration molaire augmenter progressivement, ce qui peut nécessite d'effectuer régulièrement une étape de purge de la pile à combustible.

Une régulation de la pression d'entrée d'au moins l'un des fluides d'alimentation, par exemple de l'hydrogène, peut être nécessaire pour éviter une dégradation prématurée des propriétés de la pile à combustible. En effet, à titre d'exemple, une variation de la puissance électrique fournie par la pile à combustible peut induire une augmentation ou une diminution de la pression d'hydrogène dans la pile à combustible, et donc former une différence de pression potentiellement importante de part et d'autre de la membrane électrolytique, ce qui peut conduire à une dégradation des propriétés de l'assemblage membrane électrodes.

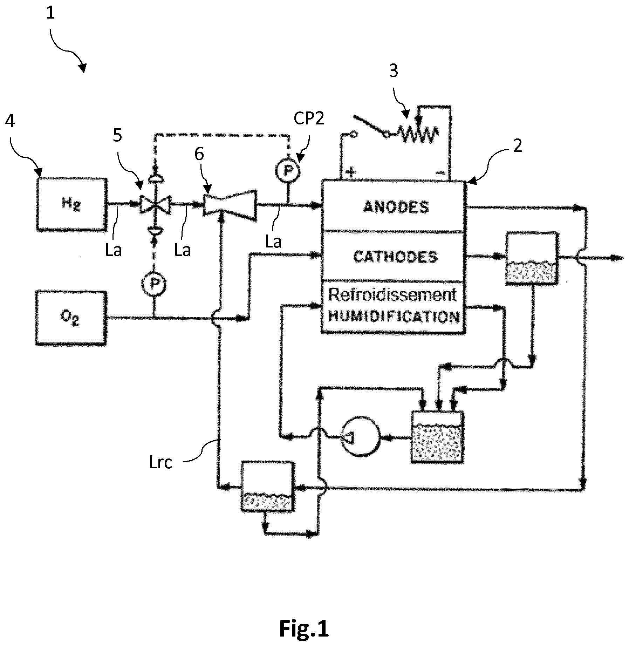

La figure 1 illustre un système électrochimique 1 à pile à combustible 2 tel que décrit dans le document US5441821, qui comporte un dispositif de régulation adapté à corriger la pression d'entrée P2 d'hydrogène lorsque celle-ci devient inférieure à une valeur minimale.

Le système électrochimique 1 comporte ainsi une pile à combustible 2 fluidiquement reliée à un réservoir 4 d'hydrogène sous pression. Le collecteur d'entrée anodique de la pile à combustible 2 permet l'introduction de l'hydrogène jusqu'aux anodes des cellules électrochimiques. La pile à combustible 2 est électriquement connectée à une charge électrique 3 qui est adaptée à imposer à la pile une valeur de puissance électrique instantanée à fournir.

Une ligne fluidique d'alimentation La relie le réservoir 4 au collecteur d'entrée anodique, et comporte un régulateur de pression 5 relié à la sortie du réservoir 4 qui maintient la pression du fluide d'alimentation en sortie sensiblement égale à une valeur de consigne.

Le système électrochimique 1 comporte une boucle de recirculation, qui comporte un éjecteur 6 disposé sur la ligne d'alimentation La entre le régulateur de pression 5 et le collecteur d'entrée, et une ligne fluidique de recirculation Lrc qui relie le collecteur de sortie à une entrée secondaire de l'éjecteur 6. La boucle de recirculation permet de réinjecter dans le collecteur d'entrée le gaz issu du collecteur de sortie, c'est-à-dire l'hydrogène non consommé et éventuellement des gaz non réactifs.

Le dispositif de régulation de la pression d'entrée comporte un capteur de pression CP2, disposé sur la ligne fluidique d'alimentation La, qui permet de mesurer la pression d'entrée P2 du fluide d'alimentation à l'entrée de la pile à combustible. Le capteur de pression CP2 est adapté à envoyer un signal de commande au régulateur de pression 5 pour modifier la valeur de consigne en fonction de la valeur mesurée de la pression d'entrée P2.

En fonctionnement, la charge électrique 3 peut induire une diminution de la puissance électrique fournie par la pile à combustible 2, ce qui se traduit par une diminution du débit molaire d'hydrogène en entrée de pile, et donc par une augmentation de la pression d'entrée P2. Lorsque la valeur mesurée P2 de la pression d'entrée atteint une valeur maximale déterminée, le capteur de pression CP2 envoie un signal de commande au régulateur de pression 5 pour que la valeur de consigne soit diminuée. La diminution de la pression en sortie du régulateur de pression 5 permet d'éviter que la pression d'entrée P2 ne devienne supérieure à la valeur maximale.

Il existe cependant un besoin de disposer d'un dispositif de régulation de la pression d'entrée de la pile à combustible qui soit davantage performant.

### EXPOSÉ DE L'INVENTION

L'invention a pour objectif de remédier au moins en partie aux inconvénients de l'art antérieur, et plus particulièrement de proposer un système électrochimique à pile à combustible comportant un dispositif performant de régulation de la pression d'entrée, notamment en termes de dynamique de régulation. Pour cela, l'objet de l'invention est un système électrochimique comportant :
- une pile à combustible, comportant un collecteur d'entrée et un collecteur de sortie adaptés à assurer l'écoulement d'un même fluide d'alimentation dans la pile à combustible ;
- un réservoir dudit fluide d'alimentation, relié au collecteur d'entrée par une ligne fluidique d'alimentation ;
- une boucle de recirculation, comportant un éjecteur disposé sur ladite ligne fluidique d'alimentation, et une ligne fluidique de recirculation qui relie le collecteur de sortie à l'éjecteur ;
- une ligne fluidique d'évacuation adaptée à évacuer du gaz provenant du collecteur de sortie, reliée au collecteur de sortie par la ligne fluidique de recirculation, et comportant une vanne de purge adaptée à autoriser un écoulement continu de gaz à un débit molaire inférieur au débit molaire du gaz circulant dans la boucle de recirculation ;
- un dispositif de régulation d'une pression dite d'entrée du fluide d'alimentation représentative d'une pression dudit fluide d'alimentation à l'intérieur de la pile à combustible, adapté à ce que la pression d'entrée reste inférieure ou égale à une valeur seuil maximale prédéterminée.

Selon l'invention, le dispositif de régulation comporte un déverseur, disposé sur la ligne fluidique d'évacuation en parallèle de la vanne de purge, et présentant une valeur de consigne égale à ladite valeur seuil maximale, de sorte que le déverseur maintient la pression d'entrée égale à la valeur de consigne et donc à la valeur seuil maximale lorsqu'il est en position d'ouverture, et occupe une position de fermeture lorsque la pression d'entrée est inférieure à la valeur de consigne.

Certains aspects préférés mais non limitatifs de ce système électrochimique sont les suivants.

Le système électrochimique peut comporter un organe de commande de la valeur de consigne du déverseur adapté à porter momentanément ladite valeur de consigne à une valeur de purge prédéterminée inférieure à la valeur seuil maximale.

La valeur de consigne du déverseur peut être une valeur pilotée de manière pneumatique par un dispositif dit pilote.

Le dispositif de régulation de la pression d'entrée peut en outre être adapté à ce que la pression d'entrée reste supérieure ou égale à une valeur seuil minimale prédéterminée, et comporte un détendeur, disposé sur la ligne fluidique d'alimentation en parallèle d'au moins l'éjecteur, et présentant une valeur de consigne égale à ladite valeur seuil minimale, de sorte que le détendeur maintient la pression d'entrée égale à la valeur de consigne et donc à la valeur seuil minimale lorsqu'il est en position d'ouverture, et occupe une position de fermeture lorsque la pression d'entrée est supérieure à la valeur de consigne.

Un régulateur de pression peut être disposé sur la ligne fluidique d'alimentation, entre le réservoir et l'éjecteur pour imposer une valeur de pression du fluide d'alimentation en sortie dudit régulateur.

Ledit régulateur de pression peut être adapté à contrôler le débit molaire du fluide d'alimentation en réponse à la valeur imposée de pression, le détendeur étant disposé en parallèle avec, en outre, le régulateur de pression. Le régulateur de pression est alors un régulateur de débit.

La ligne fluidique d'alimentation peut être configurée de sorte que la pression du fluide d'alimentation en sortie dudit détendeur est sensiblement égale à ladite pression d'entrée.

La valeur de consigne du détendeur peut être une valeur pilotée de manière pneumatique par un dispositif dit pilote.

La pile à combustible peut être connectée électriquement à une charge électrique apte à imposer à la pile à combustible une valeur de courant électrique à fournir.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique d'un système électrochimique selon un exemple de l'art antérieur ;
la figure 2A est une vue schématique d'un système électrochimique selon un premier mode de réalisation ; les figures 2B et 2C sont des vues schématiques en coupe transversale d'un exemple de déverseur équipant le dispositif de régulation de pression illustré sur la fig.2A, en position d'ouverture (fig.2B) et en position de fermeture (fig.2C) ;
la figure 3A est une vue schématique du système électrochimique selon un deuxième mode de réalisation ; les figures 3B et 3C sont des vues schématiques en coupe transversale d'un exemple de détendeur équipant le dispositif de régulation de pression illustré sur la fig.3A, en position d'ouverture (fig.3B) et en position de fermeture (fig.3C) ;
la figure 4 est une vue schématique d'une variante du système électrochimique illustré sur la figure 3A.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur un système électrochimique comportant une pile à combustible et un dispositif de régulation de pression adapté à réguler une pression dite d'entrée d'un fluide d'alimentation, cette pression d'entrée étant représentative d'une pression du fluide d'alimentation à l'intérieur de la pile à combustible, par exemple dans un circuit de distribution anodique ou cathodique, afin qu'elle ne devienne pas supérieure à une valeur seuil maximale prédéterminée. Autrement dit, le dispositif de régulation permet que la pression dite d'entrée, et donc la pression à l'intérieur de la pile à combustible, reste inférieure ou égale à la valeur seuil maximale prédéterminée.

La pression d'entrée peut être mesurée au niveau du collecteur d'entrée de la pile à combustible, par exemple sur la ligne fluidique d'alimentation reliée au collecteur d'entrée à un point de mesure choisi de telle sorte que la pression d'entrée est sensiblement égale à la pression du fluide d'alimentation à l'intérieur de la pile à combustible. Par sensiblement égale, on entend ici que la perte de charge entre le point de mesure de la pression d'entrée et un point de mesure quelconque de la pression à l'intérieur de la pile à combustible est négligeable par rapport aux valeurs desdites pressions. En variante, la perte de charge peut ne pas être négligeable, mais celle-ci étant connue, la mesure de la pression d'entrée permet de déduire la valeur de la pression du fluide d'alimentation à l'intérieur de la pile à combustible. D'une manière générale, la pression d'entrée peut être mesurée au niveau du collecteur de sortie de la pile à combustible, voire sur une ligne fluidique d'alimentation, d'évacuation ou de recirculation.

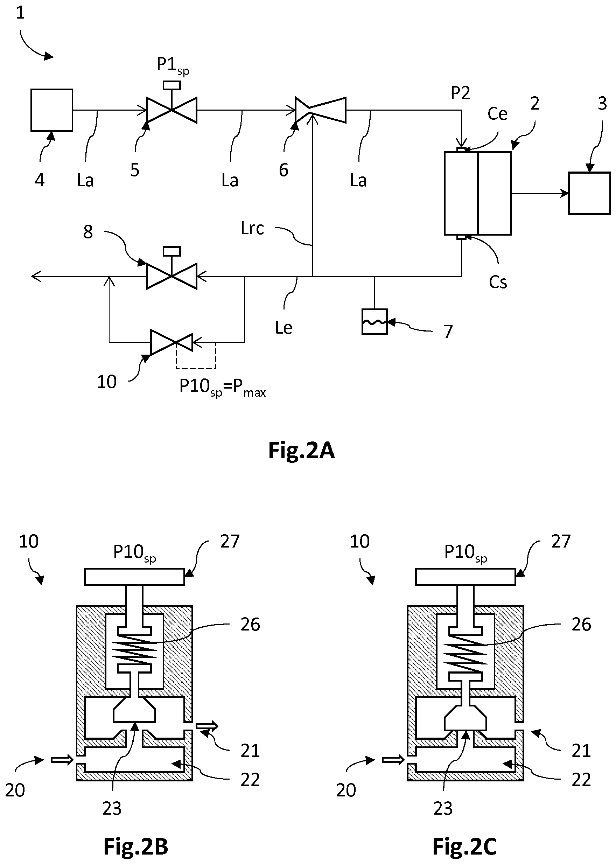

La figure 2A illustre de manière schématique un système électrochimique selon un premier mode de réalisation. On considérera ici en particulier le côté anode d'une pile à hydrogène, celle-ci étant alimentée en hydrogène côté anode et en air contenant de l'oxygène côté cathode. Cependant, l'invention s'applique également au côté cathode alimenté en air. Par ailleurs, l'invention s'applique à tout type de pile à combustible, en particulier à celles fonctionnant à basse température, c'est-à-dire à une température inférieure à 250 °C.

La pile à combustible 2 comporte au moins une cellule électrochimique, et ici un empilement de cellules électrochimiques (non représentées). Chaque cellule comporte une anode et une cathode séparées l'une de l'autre par une membrane électrolytique, cet ensemble formant un assemblage membrane électrodes (AME). L'anode, la membrane et la cathode sont des éléments classiques connus de l'homme du métier et ne sont donc pas décrites en détail.

Chaque assemblage est séparé de celui des cellules adjacentes par des plaques bipolaires, adaptées à amener les espèces réactives à l'anode d'une première cellule d'une part et à la cathode d'une cellule adjacente d'autre part, et à évacuer les produits issus des réactions électrochimiques et les espèces non réactives, ainsi qu'à transmettre le courant électrique entre les cellules. Elle peut également assurer l'écoulement d'un fluide caloporteur entre les cellules de manière à permettre l'évacuation de la chaleur produite.

La pile à combustible 2 comporte deux collecteurs d'entrée distincts, l'un anodique et l'autre cathodique, destinés à assurer l'injection fluidique des gaz d'alimentation jusqu'aux cellules, et deux collecteurs de sorties distincts correspondants, permettant d'évacuer les gaz d'alimentation non réagis et des espèces non réactives hors des cellules électrochimiques et de la pile à combustible 2. Ainsi, l'hydrogène est injecté dans la pile à combustible 2 par le collecteur d'entrée anodique Ce qui l'amène jusqu'aux cellules électrochimiques. L'hydrogène non réagi et les espèces non réactives sont ensuite évacués par le collecteur de sortie Cs correspondant.

La pile à combustible 2 peut, en fonctionnement, subir une variation de la demande de puissance électrique instantanée. C'est le cas notamment, comme décrit dans ce mode de réalisation, lorsque la pile à combustible 2 est connectée électriquement à une charge électrique 3 qui lui impose un signal représentatif d'une puissance électrique instantanée à fournir. Dans le cas où la pile à combustible 2 fonctionne en régime dit de courant électrique imposé, la charge électrique 3 impose à la pile à combustible 2 une valeur du courant électrique à fournir qui peut varier dans le temps. A titre illustratif, la charge électrique 3 peut être une batterie électrochimique, un supercondensateur ou autre.

La pile à combustible 2 est alimentée en un fluide d'alimentation, ici en hydrogène, à partir d'une source d'hydrogène sous pression, tel qu'un réservoir 4 d'hydrogène. Celui-ci est relié au collecteur d'entrée anodique Ce par une ligne fluidique d'alimentation La. L'hydrogène contenu dans le réservoir 4 est ainsi sous pression, par exemple à plusieurs bars ou dizaines de bars. Il peut être sous pression à plusieurs centaines de bars, le réservoir étant alors associé à un détendeur (non représenté) permettant de diminuer la pression de sortie de l'hydrogène.

Un régulateur de pression 5 est disposé sur la ligne d'alimentation La en aval du réservoir d'hydrogène 4. Le régulateur de pression 5 est adapté à maintenir une pression aval P1 sensiblement constante, inférieure à la pression de l'hydrogène contenu dans le réservoir 4, et indépendante des éventuelles variations de pression dans le réservoir 4. La pression aval P1 correspond à la pression de l'hydrogène en sortie du régulateur de pression 5. La valeur de la pression aval P1 est sensiblement égale à la valeur de consigne P1sp du régulateur de pression 5, cette valeur pouvant être pilotée ou non. Le régulateur de pression 5 est ici un détendeur qui impose une pression aval P1 sans contrôler la valeur du débit molaire d'hydrogène. En variante, il peut être un organe de régulation qui assure en outre un contrôle du débit molaire d'hydrogène, dont la valeur dépend de la valeur de la pression aval P1.

De manière similaire au document US5441821 mentionné précédemment, le régulateur de pression 5 peut présenter une valeur de consigne pilotée par un signal de commande émis par un capteur de la pression (non représenté) disposé à l'entrée de la pile à combustible et adapté à mesurer la pression d'entrée P2.

Le système électrochimique 1 comporte une boucle de recirculation formée d'une part d'un éjecteur 6 disposé sur la ligne d'alimentation La entre le régulateur de pression 5 et le collecteur d'entrée Ce anodique, et d'autre part d'une ligne fluidique de recirculation Lrc reliant fluidiquement le collecteur de sortie Cs anodique à une entrée dite secondaire de l'éjecteur 6.

L'éjecteur 6 comporte une entrée dite primaire reliée fluidiquement au régulateur de pression 5 par la ligne d'alimentation La, une entrée dite secondaire reliée fluidiquement au collecteur de sortie par la ligne de recirculation Lrc, et une sortie. Aussi, le gaz d'alimentation injecté à l'entrée primaire de l'éjecteur 6 forme un fluide dit moteur et le gaz de recirculation injecté à l'entrée secondaire forme un fluide dit aspiré. Le fluide moteur, par son débit, provoque par effet Venturi l'écoulement du fluide situé dans la ligne de recirculation Lrc, qui se mélange avec le fluide moteur avant d'être réinjecté dans la ligne d'alimentation La. Le fluide aspiré étant issu du collecteur de sortie Cs, il peut être formé d'hydrogène non réagi et d'espèces gazeuses non réactives tel que de l'azote ayant diffusé au travers de la membrane électrolytique.

La boucle de recirculation comporte de préférence un séparateur de phase 7, disposé sur la ligne de recirculation Lrc entre le collecteur de sortie Cs et l'éjecteur 6, qui est adapté à collecter l'eau liquide éventuellement présente en sortie de la pile à combustible 2.

Le système électrochimique 1 comporte avantageusement ici une ligne fluidique d'évacuation Le, reliée fluidiquement au collecteur de sortie Cs par la ligne de recirculation Lrc, et disposée en aval du séparateur de phase 7. Une vanne de purge 8 est ici disposée sur la ligne d'évacuation Le pour permettre l'évacuation continue de gaz. Ainsi, la vanne de purge 8 assure une évacuation faible mais continue du gaz issu du collecteur de sortie Cs, permettant ainsi de limiter l'augmentation dans le temps de la concentration d'espèces non réactives dans la boucle de recirculation. La vanne de purge 8 forme ainsi un limiteur de débit molaire.

Le système électrochimique 1 comporte en outre un dispositif de régulation de pression, adapté à maintenir la pression d'entrée P2 de l'hydrogène à une valeur inférieure ou égale à une valeur seuil maximale Pₘₐₓ prédéterminée. Dans ce mode de réalisation, le dispositif de régulation est formé d'un déverseur 10 disposé sur la ligne d'évacuation Le, en parallèle de la vanne de purge 8. Un déverseur 10 est un organe de régulation de la pression amont, c'est-à-dire qu'il est adapté à maintenir la pression amont du fluide à une valeur de consigne P10ₛₚ lorsqu'il est en position d'ouverture, et à occuper une position de fermeture lorsque la pression amont est inférieure à la valeur de consigne P10ₛₚ.

Les figures 2B et 2C illustrent un exemple de déverseur 10 conventionnel en position ouvert (fig.2B) et en position fermé (fig.2C). Le déverseur 10 est ici formé d'un conduit interne 22 reliant l'entrée 20 et la sortie 21, comportant une vanne dont une partie mobile 23 est contrainte en déplacement par un organe de rappel 26 tel qu'un ressort. Le ressort 26 est partiellement chargé au moyen d'un volant de commande 27 permettant de fixer la valeur de consigne P10ₛₚ, égale ici à la valeur seuil maximale Pₘₐₓ. En variante, la valeur de consigne P10ₛₚ peut être pilotée, par exemple de manière pneumatique au moyen d'un fluide de commande provenant d'un dispositif pilote, permettant ainsi d'obtenir une plus grande précision sur la définition de la valeur de consigne et un temps de réponse plus court en cas de modification de cette valeur de consigne.

D'une manière générale, en référence à la figure 2B, le déverseur 10 est en position d'ouverture lorsqu'il y a équilibre entre la force de pression amont qu'exerce le fluide entrant sur la partie mobile 23 de la vanne et la force de rappel exercée par le ressort 26. Ainsi, lorsque la valeur de la pression amont à l'entrée 20 tend à être supérieure à la valeur seuil maximale Pₘₐₓ égale à P10ₛₚ, il y a déplacement de la partie mobile 23 jusqu'à l'équilibre entre la pression du fluide entrant et la pression exercée par le ressort. Ainsi, la pression amont, et donc ici la pression P2, est régulée et reste sensiblement égale à la valeur de consigne P10ₛₚ. Par ailleurs, le déverseur 10 assure la régulation de la pression amont pour une large gamme de débit dans la mesure où un déverseur n'est pas un régulateur de débit. Autrement dit, la pression amont, et donc la pression d'entrée P2, reste sensiblement égale à P10ₛₚ quelle que soit la valeur du débit molaire du fluide, dans une gamme de débit donnée, définie par le dimensionnement préalable du déverseur.

Par ailleurs, en référence à la figure 2C, lorsque la pression amont à la sortie 21 du déverseur 10 est inférieure à la valeur de consigne P10ₛₚ, la partie mobile 23 est repoussée par le ressort chargé, ce qui se traduit par la fermeture de la vanne. Le déverseur 10 est alors en position de fermeture et bloque l'écoulement de l'hydrogène, qui s'écoule alors au sein de la vanne de purge 8. Lorsque la pression amont tend à redevenir supérieure à la valeur de consigne P10ₛₚ, la partie mobile 23 est repoussée sous l'effort exercé par la pression amont du fluide entrant, ce qui ouvre la vanne et autorise l'écoulement de l'hydrogène (fig.2B), à un débit molaire toutefois non régulé. La pression amont est ainsi régulée et reste alors sensiblement égale à la valeur de consigne P10ₛₚ.

Le fonctionnement du système électrochimique est maintenant décrit. En régime nominal, la pression d'entrée anodique P2 de la pile à combustible 2 présente une valeur nominale, par exemple 2,4 bars. Elle est de préférence sensiblement égale à la valeur de la pression d'entrée cathodique, de sorte que l'assemblage membrane électrodes ne présente sensiblement pas de contraintes mécaniques liées à une différence entre les pressions d'entrée anodique et cathodique.

Sur la ligne d'alimentation La, la pression de l'hydrogène en sortie du réservoir 4 peut être de l'ordre de plusieurs dizaines de bars, puis est abaissée par le régulateur de pression 5 à une valeur de consigne P1ₛₚ par exemple comprise entre 3 bars et 20 bars, par exemple égale à 3 bars. La pression amont de l'éjecteur 6, ici sensiblement égale à 3 bars, permet l'aspiration du gaz dans la boucle de recirculation. La pression aval de l'éjecteur 6 est inférieure à la pression amont, et est sensiblement égale à la pression d'entrée P2, ici 2,4 bars. Sur la ligne de recirculation Lrc, la pression en sortie de la pile à combustible 2 est légèrement inférieure à la pression d'entrée P2 du fait de la perte de charge dans les circuits de distribution et les collecteurs de la pile à combustible 2. Elle peut ainsi être sensiblement égale à 2,3 bars.

On souhaite éviter que la pression d'entrée P2 ne devienne supérieure à la valeur seuil maximale Pₘₐₓ prédéterminée. Aussi, la valeur de consigne P10ₛₚ du déverseur 10 est fixée à la valeur seuil maximale Pₘₐₓ. Dans la mesure où la pression d'entrée P2 est inférieure à la valeur de consigne P10ₛₚ du déverseur 10, celui-ci est en position de fermeture de sorte que l'hydrogène traverse la vanne de purge 8 et non pas le déverseur 10.

Cependant, la pression d'entrée P2 peut être amenée à augmenter fortement, notamment lorsque la charge électrique 3 est arrêtée brusquement. Dans ce cas, le débit molaire d'hydrogène consommé dans la pile à combustible 2 devient nul, alors que le débit molaire d'hydrogène en entrée de la pile à combustible 2 reste constant. Or, du fait que la vanne de purge 8 est un limiteur de débit, le surplus de débit molaire d'hydrogène ne peut être évacuée dans la ligne d'évacuation Le mais est dirigé vers le collecteur d'entrée Ce par la boucle de recirculation Lrc, ce qui se traduit par une augmentation brusque de la pression d'entrée P2.

La pression d'entrée P2 peut ainsi tendre à augmenter au-dessus de la valeur seuil maximale Pₘₐₓ, ce qui provoque alors l'ouverture du déverseur 10. L'hydrogène dans la ligne d'évacuation Le traverse alors le déverseur 10 et non plus la vanne de purge 8, le déverseur 10 régulant automatiquement la pression amont, et donc la pression d'entrée P2, pour qu'elle reste égale à la valeur de consigne P10ₛₚ et donc sensiblement égale à la valeur seuil maximale Pₘₐₓ, sans induire de limitation au débit molaire.

Ainsi, la pression d'entrée P2, grâce à l'ouverture et à la régulation du déverseur 10, ne peut devenir supérieure à la valeur seuil maximale Pₘₐₓ imposée, ce qui permet de préserver les propriétés de la pile à combustible et en particulier de l'assemblage membrane électrodes, notamment lors d'un arrêt brusque de la charge électrique. De plus, le dispositif de régulation présente une dynamique de régulation performante dans la mesure où le temps de réponse du déverseur 10 est très faible et quasi-immédiat. Il n'y a pas en effet de pilotage de la valeur de consigne, comme dans le document US5441821 mentionné précédemment, qui augmente nécessairement le temps de réponse de la régulation. Enfin, le dispositif de régulation simplifie le contrôle-commande de régulation du système électrochimique.

En variante, le déverseur 10 peut également présenter une fonction de purge momentanée de la ligne fluidique d'évacuation Le de la pile à combustible 2. La valeur de consigne P10ₛₚ du déverseur 10 peut ainsi être pilotée pour être égale à la valeur seuil maximale Pₘₐₓ en régime de régulation, et pour être égale à une valeur basse de purge, par exemple égale à la pression atmosphérique, en régime de purge momentanée.

Le déverseur 10 décrit précédemment assure la régulation de la pression amont qui correspond ici à la pression du fluide à l'entrée 20 du déverseur. En variante, le déverseur 10 peut être adapté pour que la pression amont prise en compte pour la régulation soit une pression mesurée hors de l'entrée 20, notamment sur la ligne d'alimentation La, par exemple au collecteur d'entrée Ce, ou sur la ligne d'évacuation Le par exemple au collecteur de sortie Cs, voire sur la ligne de recirculation Lrc. Le déplacement de la partie mobile 23 dépend ainsi du signal de commande imposé par le volant de commande 27 ou par le dispositif pilote pneumatique d'une part, et du signal de mesure de la pression amont d'autre part.

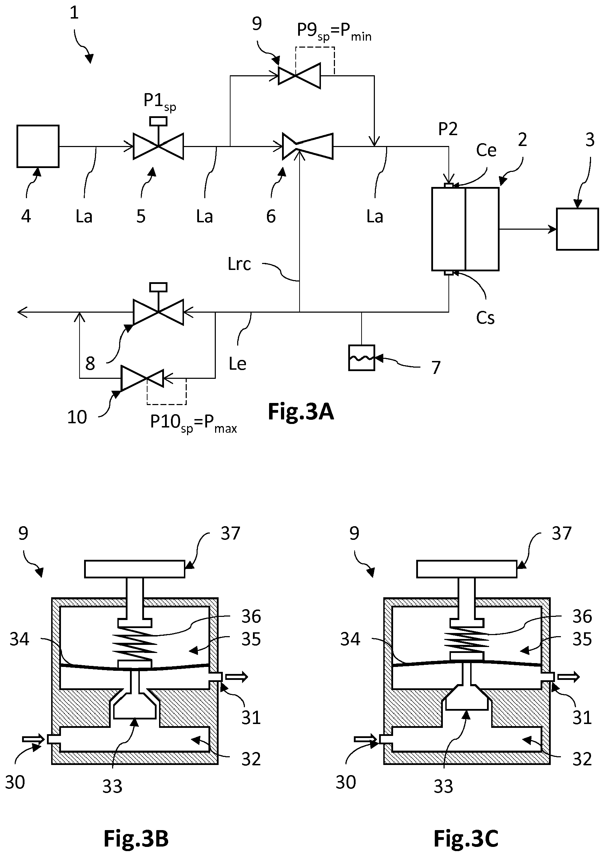

La figure 3A illustre un système électrochimique 1 selon un deuxième mode de réalisation, qui diffère de celui représenté sur la figure 2A essentiellement en ce que le dispositif de régulation est en outre adapté à maintenir la pression d'entrée anodique P2 supérieure ou égale à une valeur seuil minimale Pₘᵢₙ.

Pour cela, le dispositif de régulation comporte en outre un détendeur 9 disposé sur la ligne fluidique d'alimentation La, ici en parallèle de l'éjecteur 6. Le détendeur 9 est un organe de régulation de la pression aval, c'est-à-dire qu'il est adapté à maintenir la pression du fluide sortant à une valeur de consigne P9ₛₚ lorsqu'il est en position d'ouverture, et à occuper une position de fermeture lorsque la pression aval est supérieure à la valeur de consigne P9ₛₚ. Ainsi, la valeur de consigne P9ₛₚ étant égale à la valeur seuil minimale Pₘᵢₙ, la pression aval du détendeur 9, et donc la pression d'entrée P2, reste supérieure ou sensiblement égale à la valeur seuil minimale Pₘᵢₙ.

Les figures 3B et 3C illustrent un exemple de détendeur 9 conventionnel en position ouvert (fig.3B) et en position fermé (fig.3C). Le détendeur 9 est ici formé d'un conduit interne 32 reliant l'entrée 30 et la sortie 31 du détendeur 9, comportant une vanne dont une partie mobile 33 est fixée à une membrane flexible 34 délimitant une chambre de mesure 35, la membrane 34 étant contrainte en déplacement par un organe de rappel 36 tel qu'un ressort. Le ressort 36 est partiellement chargé au moyen d'un volant de commande 37 permettant de fixer la valeur de consigne P9ₛₚ, égale ici à la valeur seuil minimale Pₘᵢₙ. En variante, la valeur de consigne P9ₛₚ peut être pilotée, par exemple de manière pneumatique au moyen d'un fluide de commande provenant d'un dispositif pilote, permettant ainsi d'obtenir une plus grande précision sur la définition de la valeur de consigne et un temps de réponse plus court en cas de modification de cette valeur de consigne.

D'une manière générale, en référence à la figure 3B, le détendeur 9 est en position d'ouverture lorsqu'il y a équilibre entre la force de pression qu'exerce le fluide sur la partie mobile 33 de la vanne et la force de rappel exercée par le ressort 36. Ainsi, quelle que soit la valeur de la pression amont à l'entrée 30, ici sensiblement égale à P1, celle-ci étant supérieure à la valeur de consigne P9ₛₚ, la pression aval à la sortie 31 est régulée et reste sensiblement égale à la valeur de consigne P9ₛₚ. Par ailleurs, le détendeur 9 assure la régulation de la pression aval pour une large gamme de débit dans la mesure où un détendeur n'est pas un régulateur de débit. Autrement dit, la pression aval reste sensiblement égale à P9ₛₚ quelle que soit la valeur du débit molaire du fluide, dans une gamme de débit définie par le dimensionnement préalable du détecteur.

Par ailleurs, en référence à la figure 3C, lorsque la pression aval à la sortie 31 du détendeur 9 est supérieure à la valeur de consigne P9ₛₚ, la membrane 34 est repoussée et le ressort chargé, ce qui se traduit par la fermeture de la vanne. Le détendeur 9 est alors en position de fermeture et bloque l'écoulement de l'hydrogène qui passe alors par l'éjecteur 6. Lorsque la pression aval tend à redevenir inférieure à la valeur de consigne P9ₛₚ, la membrane 34 est déplacée sous l'effort exercé par le ressort 26, ce qui ouvre la vanne et autorise l'écoulement de l'hydrogène (fig.3A), à un débit molaire toutefois non régulé. La pression aval reste alors sensiblement égale à la valeur de consigne P9ₛₚ.

En fonctionnement, comme décrit précédemment, le détendeur 9 présente donc une valeur de consigne P9ₛₚ égale à la valeur seuil minimale Pₘᵢₙ déterminée. Lorsque la pression aval du détendeur, c'est-à-dire la pression en sortie de celui-ci, est supérieure à cette valeur seuil minimale P9ₛₚ, le détendeur 9 reste en position de fermeture et n'autorise donc aucun écoulement. L'hydrogène traverse alors l'éjecteur 6. Cependant, lorsque la pression aval, et donc la pression d'entrée P2, tend à diminuer au-delà de la valeur de consigne P9ₛₚ et donc de la valeur seuil minimale Pₘᵢₙ, le détendeur 9 passe en position d'ouverture et autorise l'écoulement, de sorte que l'hydrogène traverse le détendeur 9 plutôt que l'éjecteur 6. De manière similaire au fonctionnement de déverseur 10, le détendeur 9 régule automatiquement la pression aval, et donc la pression d'entrée P2, de sorte qu'elle reste supérieure ou sensiblement égale à la valeur seuil minimale Pₘᵢₙ.

Ainsi, le dispositif de régulation de pression permet de réguler la pression d'entrée anodique P2 dans une plage de pression définie par les valeurs seuils minimale Pₘᵢₙ et maximale Pₘₐₓ, ce qui permet d'éviter toute dégradation prématurée des propriétés de la pile à combustible et donc de l'assemblage membrane électrodes. La dynamique de régulation est particulièrement performante dans la mesure où le temps de réponse est très faible. Par ailleurs, elle peut permettre d'éviter l'utilisation d'une soupape de sécurité disposée en amont de la pile à combustible 2, ce qui simplifie la structure et le coût du système électrochimique.

Le détendeur 9 décrit précédemment assure la régulation de la pression aval qui correspond ici à la pression du fluide à la sortie 31 du détendeur. En variante, le détendeur 9 peut être adapté pour que la pression aval prise en compte pour la régulation soit une pression mesurée hors de la sortie 31, notamment sur la ligne d'alimentation La, par exemple au collecteur d'entrée Ce, ou sur la ligne d'évacuation Le par exemple au collecteur de sortie Cs, voire sur la ligne de recirculation Lrc. Le déplacement de la partie mobile 33 dépend ainsi du signal de commande imposé par le volant de commande 37 ou par le dispositif pilote pneumatique d'une part, et du signal de mesure de la pression aval d'autre part.

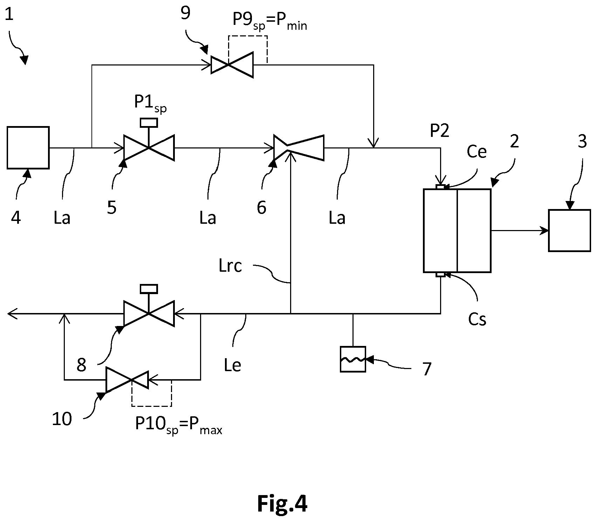

La figure 4 illustre une variante du système électrochimique 1 illustré sur la figure 3A, qui en diffère essentiellement en ce que le détendeur 9 est disposé sur la ligne d'alimentation La en parallèle du régulateur de pression 5 et de l'éjecteur 6.

Dans cet exemple, le régulateur de pression 5 impose ici le débit molaire du fluide d'alimentation dont la valeur est fonction de la valeur de consigne P1ₛₚ.

Comme mentionné précédemment, dans la mesure où le détendeur 9 n'est pas un régulateur de débit molaire, il autorise, en position d'ouverture, une variation du débit molaire d'hydrogène tout en maintenant la pression d'entrée P2 sensiblement égale à la valeur de consigne P9ₛₚ.

Ainsi, en fonctionnement, une forte augmentation du courant électrique imposé à la pile à combustible s'accompagne d'une augmentation du débit molaire d'hydrogène consommé dans la pile à combustible. Il est donc nécessaire que le débit molaire d'hydrogène entrant dans la pile à combustible soit augmenté pour répondre à cette demande. A la différence de l'exemple du document US5441821 mentionné précédemment, dans lequel l'augmentation du débit molaire d'hydrogène injecté est assurée par l'augmentation de la valeur de consigne P1ₛₚ du régulateur de pression 5, le détendeur 9 court-circuite le régulateur de pression 5 en reliant fluidiquement le collecteur d'entrée directement au réservoir d'hydrogène.

Aussi, le détendeur 9 est en mesure de répondre au fort besoin en hydrogène lors d'une augmentation du courant électrique imposé à la pile à combustible 2, tout en maintenant la pression d'entrée P2 supérieure ou égale à la valeur seuil minimale Pₘᵢₙ.

Des modes de réalisation particuliers viennent d'être décrits. Différentes variantes et modifications apparaîtront à l'homme du métier.

Comme mentionné précédemment, les modes de réalisation ont été décrits en référence à la régulation de la pression d'entrée anodique de la pile à combustible mais l'invention peut s'appliquer à la régulation de la pression d'entrée cathodique. D'une manière générale, d'autres fluides d'alimentation que l'hydrogène et l'oxygène peuvent être considérés.

## Revendications

1. Système électrochimique (1), comportant :
∘ une pile à combustible (2), comportant un collecteur d'entrée (Ce) et un collecteur de sortie (Cs) adaptés à assurer l'écoulement d'un même fluide d'alimentation dans la pile à combustible (2) ;
∘ un réservoir (4) dudit fluide d'alimentation, relié au collecteur d'entrée (Ce) par une ligne fluidique d'alimentation (La) ;
∘ une boucle de recirculation, comportant un éjecteur (6) disposé sur ladite ligne fluidique d'alimentation (La), et une ligne fluidique de recirculation (Lrc) qui relie le collecteur de sortie (Cs) à l'éjecteur (6) ;
∘ une ligne fluidique d'évacuation (Le) adaptée à évacuer du gaz provenant du collecteur de sortie (Cs), reliée au collecteur de sortie (Cs) par la ligne fluidique de recirculation (Lrc), et comportant une vanne de purge (8) adaptée à autoriser un écoulement continu de gaz à un débit molaire inférieur au débit molaire du gaz circulant dans la boucle de recirculation ;
∘ un dispositif de régulation d'une pression dite d'entrée (P2) du fluide d'alimentation représentative d'une pression dudit fluide d'alimentation à l'intérieur de la pile à combustible (2), adapté à ce que la pression d'entrée (P2) reste inférieure ou égale à une valeur seuil maximale (Pₘₐₓ) prédéterminée ;
**caractérisé en ce que** le dispositif de régulation comporte un déverseur (10), disposé sur la ligne fluidique d'évacuation (Le) en parallèle de la vanne de purge (8), et présentant une valeur de consigne (P10ₛₚ) égale à ladite valeur seuil maximale (Pₘₐₓ), de sorte que le déverseur (10) maintient la pression d'entrée (P2) égale à la valeur de consigne (P10ₛₚ) et donc à la valeur seuil maximale (Pₘₐₓ) lorsqu'il est en position d'ouverture, et occupe une position de fermeture lorsque la pression d'entrée (P2) est inférieure à la valeur de consigne (P10ₛₚ).

2. Système électrochimique (1) selon la revendication 1, comportant un organe de commande de la valeur de consigne (P10ₛₚ) du déverseur (10) adapté à porter momentanément ladite valeur de consigne (P10ₛₚ) à une valeur de purge prédéterminée inférieure à la valeur seuil maximale (Pₘₐₓ).

3. Système électrochimique (1) selon la revendication 1 ou 2, dans lequel la valeur de consigne (P10ₛₚ) du déverseur (10) est une valeur pilotée de manière pneumatique par un dispositif dit pilote.

4. Système électrochimique (1) selon l'une quelconque des revendications 1 à 3, dans lequel le dispositif de régulation de la pression d'entrée (P2) est en outre adapté à ce que la pression d'entrée (P2) reste supérieure ou égale à une valeur seuil minimale (Pₘᵢₙ) prédéterminée, et comporte un détendeur (9), disposé sur la ligne fluidique d'alimentation (La) en parallèle d'au moins l'éjecteur (6), et présentant une valeur de consigne (P9ₛₚ) égale à ladite valeur seuil minimale (Pₘᵢₙ), de sorte que le détendeur (9) maintient la pression d'entrée (P2) égale à la valeur de consigne (P9ₛₚ) et donc à la valeur seuil minimale (Pₘᵢₙ) lorsqu'il est en position d'ouverture, et occupe une position de fermeture lorsque la pression d'entrée (P2) est supérieure à la valeur de consigne (P9ₛₚ).

5. Système électrochimique (1) selon la revendication 4, dans lequel un régulateur de pression (5) est disposé sur la ligne fluidique d'alimentation (La), entre le réservoir (4) et l'éjecteur (6) pour imposer une valeur de pression du fluide d'alimentation en sortie dudit régulateur (5).

6. Système électrochimique (1) selon la revendication 5, dans lequel ledit régulateur de pression (5) est adapté à contrôler le débit molaire du fluide d'alimentation en réponse à la valeur imposée de pression, le détendeur (9) étant disposé en parallèle avec, en outre, le régulateur de pression (5).

7. Système électrochimique (1) selon l'une quelconque des revendications 4 à 6, dans lequel la ligne fluidique d'alimentation est configurée de sorte que la pression du fluide d'alimentation en sortie dudit détendeur (9) est sensiblement égale à ladite pression d'entrée (P2).

8. Système électrochimique (1) selon l'une quelconque des revendications 4 à 7, dans lequel la valeur de consigne (P9ₛₚ) du détendeur (9) est une valeur pilotée de manière pneumatique par un dispositif dit pilote.

9. Système électrochimique (1) selon l'une quelconque des revendications 1 à 8, dans lequel la pile à combustible (2) est connectée électriquement à une charge électrique (3) apte à imposer à la pile à combustible (2) une valeur de courant électrique à fournir.

## Patentansprüche

1. Elektrochemisches System (1), welches umfasst:
o eine Brennstoffzelle (2), die einen Eintrittssammler (Ce) und einen Austrittssammler (Cs) aufweist, die dafür ausgelegt sind, das Fließen ein und desselben Versorgungsfluids in der Brennstoffzelle (2) sicherzustellen;
o einen Behälter (4) für das Versorgungsfluid, der mit dem Eintrittssammler (Ce) durch eine Versorgungs-Fluidleitung (La) verbunden ist;
o eine Rezirkulationsschleife, die einen Ejektor (6), der in der Versorgungs-Fluidleitung (La) angeordnet ist, und eine Rezirkulations-Fluidleitung (Lrc), welche den Austrittssammler (Cs) mit dem Ejektor (6) verbindet, aufweist;
o eine Ablass-Fluidleitung (Le), die dafür ausgelegt ist, vom Austrittssammler (Cs) kommendes Gas abzuleiten, mit dem Austrittssammler (Cs) durch die Rezirkulations-Fluidleitung (Lrc) verbunden ist und ein Ablassventil (8) aufweist, das dafür ausgelegt ist, ein kontinuierliches Strömen von Gas mit einem Moldurchsatz zu ermöglichen, der kleiner als der Moldurchsatz des Gases ist, das in der Rezirkulationsschleife zirkuliert;
o eine Vorrichtung zur Regelung eines sogenannten Eingangsdrucks (P2) des Versorgungsfluids, der für einen Druck des Versorgungsfluids im Inneren der Brennstoffzelle (2) repräsentativ ist, die dafür ausgelegt ist, dass der Eingangsdruck (P2) kleiner oder gleich einem vorbestimmten maximalen Schwellenwert (Pₘₐₓ) bleibt;
**dadurch gekennzeichnet, dass** die Vorrichtung zur Regelung ein Überströmventil (10) aufweist, das in der Ablass-Fluidleitung (Le) parallel zum Ablassventil (8) angeordnet ist und einen Sollwert (P10ₛₚ) aufweist, der gleich dem maximalen Schwellenwert (Pₘₐₓ) ist, so dass das Überströmventil (10) den Eingangsdruck (P2) gleich dem Sollwert (P10ₛₚ) und somit gleich dem maximalen Schwellenwert (Pₘₐₓ) hält, wenn es sich in der geöffneten Position befindet, und eine geschlossene Position einnimmt, wenn der Eingangsdruck (P2) niedriger als der Sollwert (P10ₛₚ) ist.

2. Elektrochemisches System (1) nach Anspruch 1, welches ein Organ zur Steuerung des Sollwertes (P10ₛₚ) des Überströmventils (10) aufweist, das dafür ausgelegt ist, den Sollwert (P10ₛₚ) augenblicklich auf einen vorbestimmten Ablasswert zu verstellen, der kleiner als der maximale Schwellenwert (Pₘₐₓ) ist.

3. Elektrochemisches System (1) nach Anspruch 1 oder 2, wobei der Sollwert (P10ₛₚ) des Überströmventils (10) ein Wert ist, der von einer sogenannten Vorsteuerungsvorrichtung pneumatisch vorgesteuert wird.

4. Elektrochemisches System (1) nach einem der Ansprüche 1 bis 3, wobei die Vorrichtung zur Regelung des Eingangsdrucks (P2) außerdem dafür ausgelegt ist, dass der Eingangsdruck (P2) größer oder gleich einem vorbestimmten minimalen Schwellenwert (Pₘᵢₙ) bleibt, und einen Druckminderer (9) aufweist, der in der Versorgungs-Fluidleitung (La) parallel zu wenigstens dem Ejektor (6) angeordnet ist und einen Sollwert (P9ₛₚ) aufweist, der gleich dem minimalen Schwellenwert (Pₘᵢₙ) ist, so dass der Druckminderer (9) den Eingangsdruck (P2) gleich dem Sollwert (P9ₛₚ) und somit gleich dem minimalen Schwellenwert (Pₘᵢₙ) hält, wenn er sich in der geöffneten Position befindet, und eine geschlossene Position einnimmt, wenn der Eingangsdruck (P2) höher als der Sollwert (P9ₛₚ) ist.

5. Elektrochemisches System (1) nach Anspruch 4, wobei ein Druckregler (5) in der Versorgungs-Fluidleitung (La) zwischen dem Behälter (4) und dem Ejektor (6) angeordnet ist, um einen Wert des Druckes des Versorgungsfluids am Ausgang des Reglers (5) aufzuerlegen.

6. Elektrochemisches System (1) nach Anspruch 5, wobei der Druckregler (5) dafür ausgelegt ist, den Moldurchsatz des Versorgungsfluids entsprechend dem auferlegten Wert des Druckes zu steuern, wobei der Druckminderer (9) parallel zu, unter anderem, dem Druckregler (5) angeordnet ist.

7. Elektrochemisches System (1) nach einem der Ansprüche 4 bis 6, wobei die Versorgungs-Fluidleitung so gestaltet ist, dass der Druck des Versorgungsfluids am Ausgang des Druckminderers (9) im Wesentlichen gleich dem Eingangsdruck (P2) ist.

8. Elektrochemisches System (1) nach einem der Ansprüche 4 bis 7, wobei der Sollwert (P9ₛₚ) des Druckminderers (9) ein von einer sogenannten Vorsteuerungsvorrichtung pneumatisch vorgesteuerter Wert ist.

9. Elektrochemisches System (1) nach einem der Ansprüche 1 bis 8, wobei die Brennstoffzelle (2) elektrisch mit einer elektrischen Last (3) verbunden ist, die in der Lage ist, der Brennstoffzelle (2) einen Wert des zu liefernden elektrischen Stroms vorzugeben.

## Claims

1. Electrochemical system (1) comprising:
∘ a fuel cell (2) comprising an inlet manifold (Ce) and an outlet manifold (Cs) designed to allow the one same supply fluid to flow through the fuel cell (2);
∘ a reservoir (4) of the said supply fluid, connected to the inlet manifold (Ce) by a fluid supply line (La);
∘ a recirculation loop, comprising an ejector (6) arranged on the said fluid supply line (La) and a fluid recirculation line (Lrc) which connects the outlet manifold (Cs) to the ejector (6);
∘ a fluid discharge line (Le) designed to discharge gas coming from the outlet manifold (Cs) and connected to the outlet manifold (Cs) by the fluid recirculation line (Lrc), and comprising a purge valve (8) designed to allow a continuous flow of gas at a molar flow rate lower than the molar flow rate of the gas circulating in the recirculation loop;
∘ a device for regulating what is referred to as an inlet pressure (P2) of the supply fluid representative of a pressure of the said supply fluid inside the fuel cell (2), which device is designed so that the inlet pressure (P2) remains below or equal to a predetermined maximum threshold value (Pₘₐₓ);
**characterized in that** the regulating device comprises a discharge valve (10), positioned on the fluid discharge line (Le) in parallel with the purge valve (8) and having a setpoint value (P10ₛₚ) equal to the said maximum threshold value (Pₘₐₓ) so that the discharge valve (P10) keeps the inlet pressure (P2) equal to the setpoint value (P10ₛₚ) and therefore to the maximum threshold value (Pₘₐₓ) when it is in the open position, and occupies a closed position when the inlet pressure (P2) is below the setpoint value (P10sp).

2. Electrochemical system (1) according to Claim 1, comprising a member for controlling the setpoint value (P10ₛₚ) of the discharge valve (10) and designed to bring the said setpoint value (P10ₛₚ) temporarily to a predetermined purge value lower than the maximum threshold value (Pₘₐₓ).

3. Electrochemical system (1) according to Claim 1 or 2, in which the setpoint value (P10ₛₚ) of the discharge valve (10) is a value controlled pneumatically by a device referred to as a driver.

4. Electrochemical system (1) according to any one of Claims 1 to 3, in which the device for regulating the input pressure (P2) is also designed so that the input pressure (P2) remains above or equal to a predetermined minimum threshold value (Pₘᵢₙ) and comprises a pressure reducing valve (9) positioned on the fluid supply line (La) in parallel with at least the ejector (6) and having a setpoint value (P9ₛₚ) equal to the said minimum threshold value (Pₘᵢₙ) so that the pressure reducing valve (9) keeps the input pressure (P2) equal to the setpoint value (P9ₛₚ) and therefore to the minimum threshold value (Pₘᵢₙ) when it is in the open position, and occupies a closed position when the inlet pressure (P2) is higher than the setpoint value (P9ₛₚ).

5. Electrochemical system (1) according to Claim 4, in which a pressure regulator (5) is placed on the fluid supply line (La) between the reservoir (4) and the ejector (6) so as to impose a pressure value for the supply fluid leaving the said regulator (5).

6. Electrochemical system (1) according to Claim 5, in which the said pressure regulator (5) is designed to control the molar flow rate of the supply fluid in response to the imposed pressure value, the pressure reducing valve (9) being placed in parallel also with the pressure regulator (5).

7. Electrochemical system (1) according to any one of Claims 4 to 6, in which the fluid supply line is configured in such a way that the pressure of the supply fluid leaving the said pressure reducing valve (9) is substantially equal to the said inlet pressure (P2).

8. Electrochemical system (1) according to any one of Claims 4 to 7, in which the setpoint value (P9ₛₚ) of the pressure reducing valve (9) is a value controlled pneumatically by a device referred to as a driver.

9. Electrochemical system (1) according to any one of Claims 1 to 8, in which the fuel cell (2) is electrically connected to an electric load (3) able to impose on the fuel cell (2) a value of electrical current to be supplied.
